# EUROPEAN PATENT APPLICATION

(11) **EP 4 366 062 A1**
(43) Date of publication of application: **08.05.2024**
(21) Application number: 22922724.4
(22) Date of filing: 27.01.2022
(51) Int. Cl.: H01M 50/30, H01M 50/375

(54) **BATTERY, ELECTRIC APPARATUS, AND BATTERY MANUFACTURING METHOD AND MANUFACTURING DEVICE**

(71) Applicant: Contemporary Amperex Technology Co., Limited, Ningde, Fujian 352100 (CN)
(72) Inventor: YAO, Pengcheng, Ningde, Fujian 352100 (CN); ZHU, Decai, Ningde, Fujian 352100 (CN); CHEN, Xingdi, Ningde, Fujian 352100 (CN)
(74) Representative: Gong, Jinping
(86) International application number: PCT/CN2022/074308
(87) International publication number: WO 2023/141878

(57) **Abstract**

The present application provides a battery, an electric device, and a manufacturing method and manufacturing device for the battery, belonging to the technical field of batteries. In the above, the battery includes at least one battery cell, a box body, at least one box cover and at least one pressure release mechanism. The box body has a bottom wall. The at least one box cover and the box body are arranged in a first direction and define together an accommodation space for accommodating the battery cells. The at least one box cover and the bottom wall are arranged opposite to each other in the first direction X. The at least one pressure release mechanism is installed on the bottom wall, and the at least one pressure release mechanism is configured to be activated when the pressure or temperature in the accommodation space reaches a threshold value, to release the pressure in the accommodation space. Projections of the at least one pressure release mechanism and the at least one battery cell do not overlap in a plane perpendicular to the first direction X. The battery in such structure can discharge, from the bottom of the box body, high-temperature smoke generated during thermal runaway of the at least one battery cell, so as to facilitate alleviating the phenomenon that the high-temperature smoke directly impacts a vehicle body or passengers, effectively reducing blocking of the at least one pressure release mechanism by the at least one battery cell, and facilitate ensuring the normal operation and consistency of the at least one pressure release mechanism.

## Description

### Technical Field

The present application relates to a technical field of batteries, and in particular, to a battery, an electric device, and a manufacturing method and manufacturing device for a battery.

### Background Art

In recent years, new energy vehicles have developed by leaps and bounds. In the field of electric vehicles, power batteries, as the power source of the electric vehicles, play an irreplaceable and important role. With the vigorous promotion of new energy vehicles, the demand for power battery products is also increasing, wherein batteries, as the core components of new energy vehicles, have high requirements in terms of both service life and safety, etc. The battery is composed of multiple battery cells, and the thermal runaway of the battery cells is one of the important factors that threaten the safety performance of the battery. However, in the battery in the prior art, the high-temperature gas released from the interior of the battery cells during the thermal runaway of the battery cells may still cause a large potential safety hazard, which is not conducive to the use safety for consumers.

### Summary

Embodiments of the present application provides a battery, an electric device, and a manufacturing method and manufacturing device for a battery, which can effectively reduce the potential safety hazard existing in the use of the battery.

In a first aspect, embodiments of the present application provide a battery, including at least one battery cell, a box body, at least one box cover, and at least one pressure release mechanism, wherein the box body has a bottom wall, the at least one box cover and the box body are arranged in a first direction and define together an accommodation space, the accommodation space is used for accommodating the at least one battery cell, and in the first direction, the at least one box cover and the bottom wall are arranged opposite to each other; the at least one pressure release mechanism is installed on the bottom wall, the at least one pressure release mechanism is configured to be activated when the pressure or temperature in the accommodation space reaches a threshold value, to release the pressure in the accommodation space; and projections of the at least one pressure release mechanism and the at least one battery cell do not overlap in a plane perpendicular to the first direction.

In the above technical solution, the at least one pressure release mechanism is installed on the bottom wall, enabling that the high-temperature smoke generated when the at least one battery cell accommodated in the accommodation space experiences thermal runaway can be discharged by the at least one pressure release mechanism provided on the bottom wall of the box body. That is, the high-temperature smoke generated when the at least one battery cell experiences thermal runaway can be released from the bottom of the box body, so as to effectively alleviate the phenomenon that the high-temperature smoke directly impacts a vehicle body or passenger(s) after being discharged from the box body, to reduce the potential safety hazard during use of the battery. In addition, the at least one pressure release mechanism and the at least one battery cell are provided such that projections thereof do not overlap in the plane perpendicular to the first direction, to realize misalignment arrangement of the at least one pressure release mechanism and the at least one battery cell, thereby effectively reducing blocking of the at least one pressure release mechanism by the at least one battery cell, enabling that the at least one pressure release mechanism can stably release the pressure in the accommodation space when the pressure or temperature in the accommodation space reaches the threshold value, and further facilitating ensuring the normal operation and consistency of the at least one pressure release mechanism to improve the use safety of the battery in such structure.

In some embodiments, the battery further includes at least one gas discharging element, wherein the at least one gas discharging element each is installed on the bottom wall and extends into the accommodation space, and the at least one gas discharging element each is provided thereinside with a gas discharging channel communicating with the accommodation space, and the gas discharging channel is configured to guide the exhaust generated by the thermal runaway of the at least one battery cell to pass through the at least one pressure release mechanism and then be discharged from the box body.

In the above technical solution, the at least one gas discharging element is installed on the bottom wall, and the at least one gas discharging element each is provided thereinside with a gas discharging channel communicating with the accommodation space, such that the exhaust generated when the at least one battery cell in the accommodation space experiences thermal runaway can be guided by the gas discharging channel to the pressure release mechanism, so as to allow the gas discharging element to play the role of guiding the exhaust generated by the thermal runaway of the at least one battery cell, facilitating the pressure release mechanism releasing the pressure inside the accommodation space.

In some embodiments, the at least one pressure release mechanism is installed in the corresponding gas discharging channel.

In the above technical solution, the at least one pressure release mechanism is installed in the gas discharging channel of the gas discharging element, enabling that the gas discharging element can play a certain role of protecting the at least one pressure release mechanism, thereby effectively reducing the phenomenon that the at least one pressure release mechanism is damaged or collides due to external force during use, to ensure the normal use of the at least one pressure release mechanism, prolong the service life of the at least one pressure release mechanism, and further facilitate improving the use safety of the battery.

In some embodiments, in the first direction, the at least one gas discharging element each has a gas discharging end for discharging the exhaust out of the box body, and the gas discharging end extends to one side of the bottom wall away from the box cover.

In the above technical solution, the gas discharging end of the gas discharging element extends out of one side of the bottom wall away from the box cover, that is, one end of the gas discharging element in the first direction passes through and extends out of the bottom wall. For the battery in such structure, on the one hand, it is convenient to install and fix the gas discharging element on the box body, and on the other hand, it is convenient to discharge the exhaust generated by the thermal runaway of the at least one battery cell through the gas discharging channel of the gas discharging element, which is beneficial to achieve the directional discharging of the exhaust in the accommodation space.

In some embodiments, the battery further includes at least one divider, wherein the at least one divider is configured to divide the accommodation space into a plurality of chambers, the chambers are used to accommodate the at least one battery cell, and the at least one divider each is mounted with the at least one gas discharging element.

In the above technical solution, the at least one divider is provided inside the accommodation space, such that the at least one divider can divide the accommodation space into a plurality of chambers for accommodating the at least one battery cell, and the at least one gas discharging element is installed on the at least one divider to realize that the gas discharging element is located between the battery cells in the accommodation space, thus shortening the distance between the gas discharging element and the battery cell, further effectively shortening the discharging path of the exhaust generated by the battery cell during thermal runaway, and facilitating alleviating the phenomenon that the exhaust diffuses in the accommodation space.

In some embodiments, a plurality of flow guiding channels arranged at intervals in the first direction and communicating with each other are formed inside each of the at least one divider, at least one of the flow guiding channels communicates with the accommodation space, and the flow guiding channel communicate with the at least one gas discharging channel.

In the above technical solution, a plurality of flow guiding channels communicating with each other are provided inside the divider, and the flow guiding channels can communicate with the accommodation space and the gas discharging channel of the gas discharging element, such that the exhaust generated by the thermal runaway of the battery cell can enter the gas discharging channel of the gas discharging element through the flow guiding channel, so as to be released by the pressure release mechanism. The battery in such structure can play a role of guiding the exhaust through the flow guiding channels and simultaneously increase the flowing strike of the exhaust, thus playing a certain role of cooling the exhaust.

In some embodiments, the divider has at least one dividing portion, wherein in the first direction, one dividing portion is provided between each two adjacent flow guiding channels, and the at least one dividing portion each is provided with at least one first vent hole for communicating two adjacent flow guiding channels, the gas discharging element extends in the first direction, the gas discharging element is provided with a plurality of second vent holes arranged at intervals in the first direction, and the second vent holes are used to communicate with the flow guiding channels and the gas discharging channels.

In the above technical solution, the divider is provided with at least one dividing portion, through which the interior of the divider is divided to obtain multiple flow guiding channels, and the gas discharging element is provided with multiple second vent holes at intervals in the extending direction thereof, to achieve the communication between the gas discharging channel and the flow guiding channels. Hence, the battery in such structure can precipitate the particulate matters in the exhaust while guiding, through the flow guiding channels, the exhaust generated by the thermal runaway of the battery cell, thus reducing the risk of blocking the gas discharging channel or blocking the pressure release mechanism after the particulate matters in the exhaust enters the gas discharging channel, and further facilitating reducing the potential safety hazard of the battery during use.

In some embodiments, in the first direction, one side of the divider facing the box cover is provided with at least one third vent hole, and the at least one third vent hole is configured to communicate with the accommodation space and the flow guiding channel of the plurality of the flow guiding channels that is close to the box cover.

In the above technical solution, by providing, at the top of the divider, the at least one third vent hole communicating with the flow guiding channel of the plurality of the flow guiding channels that is close to the box cover, the exhaust generated by the thermal runaway of the battery cell can enter the flow guiding channel from the top of the divider, thus facilitating alleviating the phenomenon that the exhaust is blocked by the battery cell when entering the flow guiding channel, and facilitating the exhaust entering the flow guiding channel.

In some embodiments, in the first direction, two ends of the gas discharging element are respectively connected with a first connector and a second connector, and the first connector abuts against one side of the bottom wall away from the box cover, the second connector abuts against one side of the divider facing the box cover, and the first connector and the second connector are used to cooperate with each other to fix the gas discharging element.

In the above technical solution, two ends of the gas discharging element are respectively connected with the first connector and the second connector, and the first connector and the second connector respectively abut against the side of the bottom wall away from the box cover and the side of the divider facing the box cover. That is, after being connected with the two ends of the gas discharging element, the first connector and the second connector respectively abut against the outer side of the bottom wall and the top of the divider, so that the first connector and the second connector can cooperate with each other to tightly fix the gas discharging element to the divider, thus realizing the installation of the gas discharging element. This structure is simple and easy to realize.

In some embodiments, in the first direction, one side of the bottom wall away from the box cover is provided with at least one accommodation groove each configured for accommodating the corresponding first connector.

In the above technical solution, one side of the bottom wall away from the box cover is provided with the at least one accommodation groove each configured for accommodating the corresponding first connector, so that each first connector can be accommodated in the corresponding accommodation groove, thus enabling that the accommodation groove on the one hand can play a certain role of limiting the first connector to reduce the risk of disengagement of the first connector caused by the movement thereof and on the other hand, can play a certain role of positioning the first connector to facilitate installing the first connector during assembly.

In some embodiments, in the first direction, the first connector does not protrude beyond the side of the bottom wall away from the box cover.

In the above technical solution, the first connector is provided to not protrude beyond the side of the bottom wall away from the box cover in the first direction, that is, the first connector is completely accommodated in the accommodation groove. By adopting this structure, the first connector can be better protected to alleviate the phenomenon of abrasion or colliding of the first connector during use.

In a second aspect, embodiments of the present application provide an electric device, including at least one battery mentioned above.

In a third aspect, embodiments of the present application further provide a manufacturing method for a battery, including providing a box body which has a bottom wall; providing at least one box cover; providing at least one pressure release mechanism; providing at least one battery cell; installing the at least one pressure release mechanism on the bottom wall; installing the at least one battery cell inside the box body; making the box cover cover the at least one box body, such that the at least one box cover and the box body are arranged in a first direction and define together an accommodation space for accommodating the at least one battery cell, wherein projections of the at least one pressure release mechanism and the at least one battery cell do not overlap in a plane perpendicular to the first direction, and the at least one pressure release mechanism is configured to be activated when the pressure or temperature in the accommodation space reaches a threshold value, to relieve the pressure in the accommodation space.

In a fourth aspect, embodiments of the present application further provide a manufacturing device for a battery, including a first providing device, a second providing device, a third providing device, a fourth providing device, a first assembly device, a second assembly device and a third assembly device, wherein the first providing device is configured for providing a box body which has a bottom wall; the second providing device is configured for providing at least one box cover; the third providing device is configured for providing at least one pressure release mechanism; the fourth providing device is configured for providing at least one battery cell; the first assembly device is configured for installing the at least one pressure release mechanism at the bottom wall; the second assembly device is configured for installing the at least one battery cell inside the box body; and the third assembly device is configured for making the at least one box cover cover the box body, such that the at least one box cover and the box body are arranged in a first direction and define together an accommodation space for accommodating the at least one battery cell, wherein projections of the at least one pressure release mechanism and the at least one battery cell do not overlap in a plane perpendicular to the first direction, and the at least one pressure release mechanism is configured to be activated when the pressure or temperature in the accommodation space reaches a threshold value, to relieve the pressure in the accommodation space.

### Brief Description of Drawings

In order to more clearly illustrate the technical solutions of the embodiments of the present application, the drawings that are required to be used in the embodiments will be briefly introduced below. It should be understood that the following drawings only show some embodiments of the present application, and thus it should not be regarded as a limitation on the scope, and those skilled in the art can also obtain other related drawings based on these drawings without paying creative work.
FIG. 1 is a schematic structural view of a vehicle provided in some embodiments of the present application;
FIG. 2 is an exploded view of a structure of a battery provided in some embodiments of the present application;
FIG. 3 is a bottom view of a battery provided in some embodiments of the present application;
FIG. 4 is a top view of a box body of a battery provided in some embodiments of the present application;
FIG. 5 is a schematic view showing connection of a box body and gas discharging elements provided in some embodiments of the present application;
FIG. 6 is a sectional view of gas discharging elements being connected with a box body, provided in some embodiments of the present application;
FIG. 7 is a sectional view of gas discharging elements being connected with a box body, provided in yet some embodiments of the present application;
FIG. 8 is a schematic structural view of a gas discharging element provided in some embodiments of the present application;
FIG. 9 is a local enlarged view of Part A of the divider shown in FIG. 6;
FIG. 10 is a schematic flow chart of a manufacturing method for a battery provided in some embodiments of the present application; and
FIG. 11 is a schematic block diagram of a manufacturing device for a battery provided in some embodiments of the present application.

Reference signs: 1000-vehicle; 100-battery; 10-battery cell; 11-pressure release element; 20-box body; 21-bottom wall; 211-first region; 212-second region; 213-installation hole; 214-accommodation groove; 30-box cover; 40-pressure release mechanism; 50-gas discharging element; 51-gas discharging channel; 52-gas discharging end; 53-limiting part; 54-second vent hole; 60-divider; 61-flow guiding channel; 62-dividing portion; 621-first vent hole; 63-third vent hole; 70-chamber; 80-first connector; 90-second connector; 200-controller; 300-motor; X-first direction; Y-second direction; Z-third direction.

### Detailed Description of Embodiments

In order to make the purposes, technical solutions and advantages of the embodiments of the present application clearer, the technical solutions in the embodiments of the present application will be clearly described below in conjunction with the drawings in the embodiments of the present application. Obviously, the described embodiments are some, but not all of embodiments of the present application. Based on the embodiments in the present application, all other embodiments obtained by persons of ordinary skill in the art without paying creative efforts fall within the protection scope of the present application.

Unless otherwise defined, all technical and scientific terms used herein have the same meaning as commonly understood by those skilled in the technical field of the present application. The terms used in the description of the present application are only for the purpose of describing embodiments, and are not intended to limit the present application. Terms "comprising" and "having" and any variations thereof in the specification and claims of the present application and the above description of the drawings are intended to cover a non-exclusive inclusion. The terms "first", "second" and the like in the description and claims of the present application or the above drawings are used to distinguish different objects, rather than to describe a specific sequence or primary-subordinate relationship.

Reference made in the present application to "embodiment" means that a particular feature, structure, or characteristic described in connection with the embodiment may be included in at least one embodiment of the present application. The phases occurring in various places in the specification do not necessarily all refer to the same embodiment, nor are separate or alternative embodiments mutually exclusive of other embodiments.

In the description of the present application, it should be noted that, unless otherwise clearly specified and defined, the terms "installation", "link", "connection" and "attachment" should be understood in a broad sense. For example, it may be a fixed connection, it may also be detachable connection or integral connection; it may be direct connection or indirect connection through an intermediary, and it may be internal communication between two components. Those of ordinary skill in the art may understand the specific meanings of the above terms in the present application according to specific situations.

The term "and/or" in the present application indicates only an association relationship describing associated objects, meaning that there may be three kinds of relationships. For example, A and/or B may indicate three situations: there is only A, there are both A and B, and there is only B. In addition, the character "/" in the present application generally indicates that the associated objects therebefore and thereafter have an "or" relationship.

In the embodiments of the present application, the same reference numerals represent the same components, and for the sake of brevity, in different embodiments, detailed descriptions of the same components are omitted. It should be understood that the thickness, length, width and other dimensions of the various components in the embodiments of the application shown in the drawings, as well as the overall thickness, length, width and other dimensions of the integrated device, are for illustrative purposes only, and should not constitute any limitation to the present application.

The term "multiple" appearing in the present application refers to more than two (including two).

In the present application, the battery cell may include lithium ion secondary battery, lithium ion primary battery, lithium sulfur battery, sodium lithium ion battery, sodium ion battery or magnesium ion battery etc., which is not limited in the embodiments of the present application. The battery cell may be in a shape of cylinder, flat body, cuboid or in other shape, which is not limited in the embodiments of the present application. Battery cells are generally divided into three types according to packaging methods: cylindrical battery cells, square battery cells and pouch battery cells, which are not limited in the embodiments of the present application.

The battery mentioned in embodiments of the present application refers to a single physical module that includes one or more battery cells to provide higher voltage and capacity. For example, the battery mentioned in the present application may include a battery module or a battery pack, and the like. The battery generally includes a box body for packaging one or more battery cells or multiple battery modules. The box body may prevent a liquid or other foreign object from affecting the charging or discharging of the battery cells.

The battery cell includes a housing, at least one electrode assembly and an electrolytic solution, wherein the housing is used to accommodate the at least one electrode assembly and the electrolytic solution. The electrode assembly is composed of a positive electrode plate, a negative electrode plate and a separator. The battery cell works mainly by moving metal ions between the positive electrode plate and negative electrode plate. The positive electrode plate includes a positive current collector and a positive electrode active material layer. The positive electrode active material layer is coated on the surface of the positive current collector, the positive current collector not coated with the positive electrode active material layer protrudes from the positive current collector coated with the positive electrode active material layer, and the positive current collector not coated with the positive electrode active material layer is used as the positive electrode tab. Taking a lithium ion battery cell as an example, the material of the positive current collector may be aluminum, and the positive electrode active material may be lithium cobaltate, lithium iron phosphate, ternary lithium, or lithium manganate, etc. The negative electrode plate includes a negative current collector and a negative electrode active material layer. The negative electrode active material layer is coated on the surface of the negative current collector, the negative current collector not coated with the negative electrode active material layer protrudes from the negative current collector coated with the negative electrode active material layer, and the negative current collector not coated with the negative electrode active material layer is used as the negative electrode tab. The material of the negative current collector may be aluminum, and the negative electrode active material may be carbon or silicon, etc. In order to ensure that a large current passes without causing fusing, the number of positive electrode tabs is multiple and the positive electrode tabs are stacked together, and the number of negative electrode tabs is multiple and the negative electrode tabs are stacked together.

The material of the separator may be PP (polypropylene) or PE (polyethylene), etc. In addition, the electrode assembly may be in a winding structure or may be in a laminated/stacked structure, which is not limited in the embodiments of the present application.

In recent years, new energy vehicles have developed by leaps and bounds. In the field of electric vehicles, power batteries, as the power source of the electric vehicles, play an irreplaceable and important role. With the vigorous promotion of new energy vehicles, the demand for power battery products is also increasing, wherein batteries, as the core components of new energy vehicles, have high requirements in terms of both service life and safety. The battery is composed of multiple battery cells, and the thermal runaway of the battery cells is one of the important factors that threaten the safety performance of the battery. Especially, the high-temperature gas released from the interior of the battery cells may cause increased pressure and temperature inside the battery, so that it is very easy to cause the risk of fire and explosion of the battery, which leads to a greater threat to the use safety of the battery.

The inventors found that in order to prevent the high-temperature gas from threatening the use safety of the battery, with the gas released from the interior of the battery cells when the battery cells inside the box body of the battery experiences thermal runaway, pressure release mechanism(s) is usually provided on the box cover of the box body of the battery in the prior art, so that the pressure release mechanism(s) can release the high-temperature gas in the box body when the pressure or temperature of the high-temperature gas in the box body reaches a threshold value, so as to reduce the explosion or spontaneous combustion phenomenon of the battery. However, in the battery in such structure, the pressure release mechanism(s) provided on the box cover may directly impact other components or passengers of the vehicle having such battery when releasing the high-temperature gas in the box body, thereby causing damage to the vehicle or threatening the use safety for passengers and further resulting in the greater potential safety hazard of the battery during use.

Based on the above considerations, in order to solve the problem of relatively large potential safety hazard of the battery in the later use, the inventors designed a battery after in-depth researches, including at least one battery cell, a box body, at least one box cover, and at least one pressure release mechanism. The box body has a bottom wall. The at least one box cover and the box body are arranged in a first direction and define together an accommodation space for accommodating the at least one battery cell. The box cover and the bottom wall are arranged opposite to each other in the first direction. The at least one pressure release mechanism is installed on the bottom wall, and the at least one pressure release mechanism is configured to be activated when the pressure or temperature in the accommodation space reaches a threshold value, to release the pressure in the accommodation space. Projections of the at least one pressure release mechanism and the at least one battery cell do not overlap in a plane perpendicular to the first direction.

In the battery in such structure, the at least one pressure release mechanism is installed on the bottom wall of the box body, enabling that the high-temperature smoke generated when the at least one battery cell accommodated in the accommodation space experiences thermal runaway can be discharged by the at least one pressure release mechanism provided on the bottom wall of the box body. That is, the high-temperature smoke generated when the at least one battery cell experiences thermal runaway can be released from the bottom of the box body, so as to effectively alleviate the phenomenon that the high-temperature smoke directly impacts a vehicle body or passenger(s) after being discharged from the box body, to reduce the potential safety hazard during use of the battery.

In addition, the at least one pressure release mechanism and the at least one battery cell are provided such that projections thereof do not overlap in a plane perpendicular to the first direction, to realize misalignment arrangement of the at least one pressure release mechanism and the at least one battery cell, thereby effectively reducing blocking of the at least one pressure release mechanism by the at least one battery cell, enabling that the at least one pressure release mechanism can stably release the pressure in the accommodation space when the pressure or temperature in the accommodation space reaches the threshold value, and further facilitating ensuring the normal operation and consistency of the at least one pressure release mechanism to improve the use safety of the battery in such is structure.

The batteries disclosed in the embodiments of the present application may be used, but not limited to, in electric devices such as vehicles, ships or aircrafts. The power supply system of the electric device may be formed by using the battery disclosed in the present application, which facilitates alleviating the phenomenon that the high-temperature smoke generated by the battery cell(s) of the battery during thermal runaway directly impacts the vehicle body or passengers, so as to improve the use safety of the battery.

Embodiments of the present application provide an electric device using the battery as a power source. The electric device may be, but not limited to, a mobile phone, a tablet, a notebook computer, an electric toy, an electric tool, a battery car, an electric vehicle, a ship, a spacecraft, and the like. Among them, the electric toy includes fixed or mobile electric toy, for example, game console, electric car toy, electric ship toy and electric airplane toy, etc. and the spacecraft may include airplane, rocket, space shuttle, spaceship, etc.

In the following embodiments, for convenience of description, description is made by taking, as an example, an electric device according to an embodiment of the present application being a vehicle 1000.

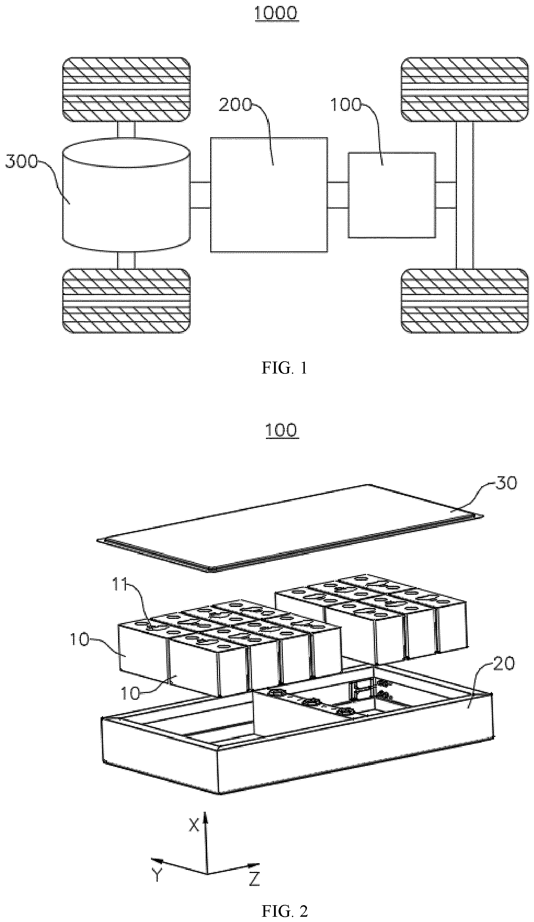

Referring to FIG. 1, FIG. 1 is a schematic structural view of a vehicle 1000 provided in some embodiments of the present application. The vehicle 1000 may be a fuel vehicle, a gas vehicle or a new energy vehicle, and the new energy vehicle may be a pure electric vehicle, a hybrid power vehicle or an extended-range vehicle, etc. A battery 100 is provided inside the vehicle 1000, and the battery 100 may be provided at the bottom, head or tail of the vehicle 1000. The battery 100 may be used for supplying power to the vehicle 1000. For example, the battery 100 may be used as an operating power source of the vehicle 1000. The vehicle 1000 may further include a controller 200 and a motor 300, the controller 200 being used to control the battery 100 to supply power to the motor 300, for example, for working power requirements during starting, navigating and running of the vehicle 1000.

In some embodiments of the present application, the battery 100 can not only be used as an operating power source for the vehicle 1000, but also be used as a driving power source for the vehicle 1000 to replace or partially replace fuel oil or natural gas to provide driving power for the vehicle 1000.

Referring to FIG. 2, FIG. 2 is an exploded view of a structure of a battery 100 provided in some embodiments of the present application. The battery 100 includes battery cells 10, a box body 20 and a box cover 30. The box cover 30 covers the box body 20, and the box body 20 and the box cover 30 define together the accommodation space for accommodating the battery cells 10.

In the battery 100, there may be one or multiple battery cells 10. When the battery 100 has multiple battery cells 10, the multiple battery cells 10 may be in serial, parallel or hybrid connection with each other. The hybrid connection means that the multiple battery cells 10 are connected with each other both in series and in parallel. The multiple battery cells 20 may be in serial, parallel or hybrid connection with each other, and then the whole composed of the multiple battery cells 10 is accommodated in the box body 20. Certainly, the battery 100 may be formed in the way that the multiple battery cells 10 are first in serial or in parallel or in hybrid connection with each other to form battery modules, and then the multiple battery modules are in serial or in parallel or in hybrid connection with each other to form a whole, and accommodated in the box body 20. The battery 100 may also include other structures, for example, the battery 100 may further include a bus component for realizing the electrical connection between the multiple battery cells 10.

In FIG. 2, the battery cell 10 is provided with pressure release elements 11, each of the pressure release elements 11 is located at the top of the corresponding battery cell 10, and the pressure release element 11 is used to release the pressure inside the battery cell 10 when the pressure or temperature inside the battery cell 10 reaches a predetermined value, that is, the pressure release element 11 is used to release the high-temperature gas inside the battery cell 10 when the battery cell 10 experiences thermal runaway. The pressure release element 11 may be a component such as an explosion-proof valve, a burst disk, a gas valve, a pressure release valve, or a safety valve, etc.

In the above, each battery cell 10 may be a secondary battery or a primary battery. It may also be a lithium-sulfur battery, a sodium ion battery or a magnesium ion battery, but is not limited thereto. The battery cell 10 may be in a shape of cylinder, flat body, cuboid or in other shape, etc.

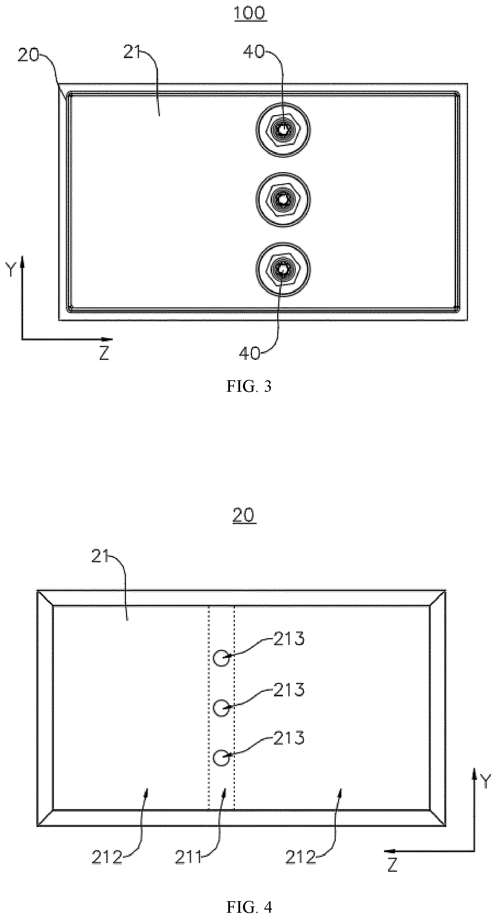

According to some embodiments of the present application, referring to FIG. 2, and further referring to FIGS. 3 and 4, FIG. 3 is a bottom view of a battery 100 provided in some embodiments of the present application, and FIG. 4 is a schematic structural view of a box body 20 of a battery 100 provided in some embodiments of the present application. The present application provides a battery 100. The battery 100 includes battery cells 10, a box body 20, a box cover 30 and pressure release mechanisms 40. The box body 20 has a bottom wall 21. The box cover 30 and the box body 20 are arranged in a first direction X and define together an accommodation space for accommodating the battery cells 10. The box cover 30 and the bottom wall 21 are arranged opposite to each other in the first direction X. The pressure release mechanisms 40 are installed on the bottom wall 21, and the pressure release mechanisms 40 each are configured to be activated when the pressure or temperature in the accommodation space reaches a threshold value, to release the pressure in the accommodation space. Projections of the pressure release mechanisms 40 and the battery cells 10 do not overlap in a plane perpendicular to the first direction X.

In the above, the first direction X is an arrangement direction of the box cover 30 and the box body 20 after the box cover 30 covers the box body 20. Projections of the pressure release mechanisms 40 and the battery cells 10 do not overlap in a plane perpendicular to the first direction X, i.e., the pressure release mechanisms 40 and the battery cells 10 do not have mutually overlapping part in the first direction X. That is, in FIG. 4, a first region 211 and second regions 212 are formed at the bottom wall 21 of the box body 20 (for convenience of illustration, it can be seen from FIG. 4 that two dotted lines are made on the bottom wall 21 of the box body 20, the portion between the two dotted lines is the first region 211, and two sides of the two dotted lines are the second regions 212), the first region 211 is provided with installation holes 213 for installing the pressure release mechanisms 40, the installation holes 213 running through the bottom wall 21 of the box body 20 such that the pressure release mechanisms 40 can release the pressure inside the accommodation space, and the second regions 212 are used for installing the battery cells 10.

Exemplarily, there is one first region 211 formed on the bottom wall 21, and the first region 211 extends in the second direction Y, so that second regions 212 are formed at two sides of the first region 211 on the bottom wall 21 in the third direction Z, and any two of the first direction X, the second direction Y and the third direction Z are perpendicular to each other. The second direction Y is the width direction of the box body 20, and the third direction Z is the length direction of the box body 20.

In some embodiments, the pressure release mechanism 40 may be a component such as an explosion-proof valve, a burst disk, a gas valve, a pressure release valve, or a safety valve, etc.

Exemplarily, there are three pressure release mechanisms 40 on the bottom wall 21, the three pressure release mechanisms 40 are arranged at intervals in the second direction Y, and correspondingly, the first region 211 of the bottom wall 21 is provided with three installation holes 213. Certainly, in other embodiments, there may be one, two, four or five, etc. pressure release mechanisms 40 on the bottom wall 21.

In the above, the box body 20 is in a hollow structure with one side open, the box cover 30 covers one side of the box body 20, such that the box body 20 and the box cover 30 define together the accommodation space for accommodating the battery cells 10. In some embodiments, the box body 20 may be in other structure. For example, the box body 20 includes a box body 20 and two box covers 30. The box body 20 is in a hollow structure with two opposite sides both open, the two box covers 30 respectively cover the two sides of the box body 20, such that the box body 20 and the two box covers 30 define together the accommodation space for accommodating the battery cells 10. In this embodiment, one box cover 30 of the two box covers 30 is the bottom wall 21 for mounting the pressure release mechanisms 40 of the box body 20. Certainly, the box body 20 formed of the box body 20 and box covers 30 may be in various structures, such as a cylinder, a cuboid and so on.

The pressure release mechanisms 40 are installed on the bottom wall 21 of the box body 20, enabling that the high-temperature smoke generated when the battery cells 10 accommodated in the accommodation space experiences thermal runaway can be discharged by the pressure release mechanisms 40 provided on the bottom wall 21 of the box body 20. That is, the high-temperature smoke generated when the battery cells 10 experiences thermal runaway can be released from the bottom of the box body 20, so as to effectively alleviate the phenomenon that the high-temperature smoke directly impacts a vehicle body or passenger(s) after being discharged from the box body 20, to reduce the potential safety hazard during use of the battery 100. In addition, the pressure release mechanisms 40 and the battery cells 10 are provided such that projections thereof do not overlap in a plane perpendicular to the first direction X, to realize misalignment arrangement of the pressure release mechanisms 40 and the battery cells 10, thereby effectively reducing blocking of the pressure release mechanisms 40 by the battery cells 10, enabling that the pressure release mechanisms 40 can stably release the pressure in the accommodation space when the pressure or temperature in the accommodation space reaches the threshold value, and further facilitating ensuring the normal operation and consistency of the pressure release mechanisms 40 to improve the use safety in the battery 100 of this structure.

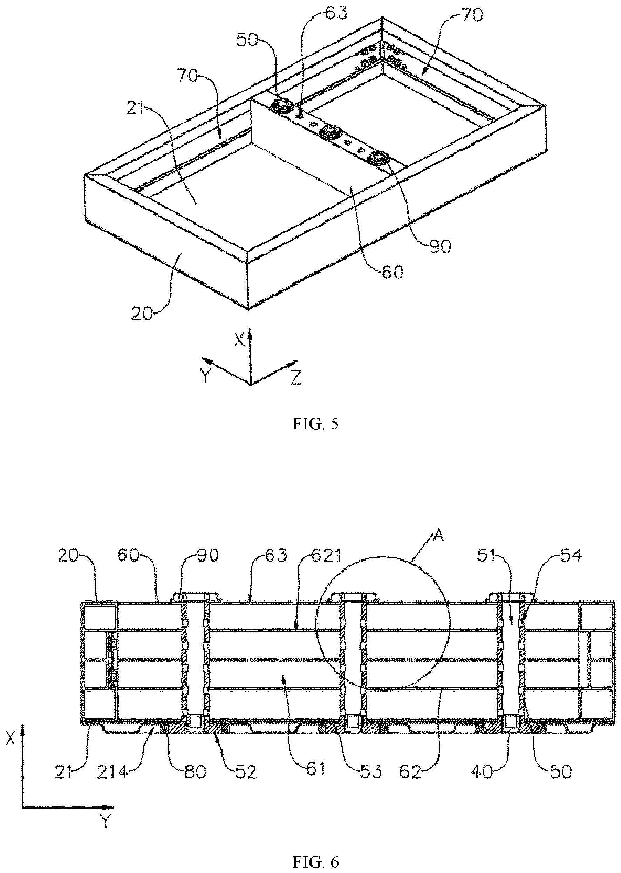

According to some embodiments of the present application, referring to FIG. 4, and further referring to FIGS. 5 and 6, FIG. 5 is a schematic view showing connection of the box body 20 and the gas discharging elements 50 provided in some embodiments of the present application, and FIG. 6 is a sectional view of gas discharging elements 50 being connected with a box body 20 provided in some embodiments of the present application. The battery 100 further includes gas discharging elements, wherein the gas discharging elements 50 are installed on the bottom wall 21 and extend into the accommodation space, and each gas discharging element 50 is formed thereinside with a gas discharging channel 51 communicating with the accommodation space, and the gas discharging channels are configured to guide the exhaust generated by the thermal runaway of the battery cells 10 to pass through the pressure release mechanisms 40 and then be discharged from the box body 20.

In the above, the gas discharging elements 50 extend in the first direction X, the gas discharging elements 50 are inserted into the installation holes 213 of the bottom wall 21, and the pressure release mechanisms 40 are installed on the gas discharging elements 50, to allow the gas discharging elements 50 to guide the exhaust generated by the thermal runaway of the battery cells 10 to the pressure release mechanisms 40 for discharging. Exemplarily, the exhaust is high-temperature smoke, etc. generated by the battery cells 10 during thermal runaway.

The gas discharging elements 50 are installed on the bottom wall 21, and each gas discharging element 50 is formed thereinside with a gas discharging channel 51 communicating with the accommodation space, such that the exhaust generated during thermal runaway by the battery cells 10 in the accommodation space can be guided through the gas discharging channels 51 to the pressure release mechanisms 40, so as to allow the gas discharging elements 51 to play a role of guiding the exhaust generated by the thermal runaway of the battery cells 10, facilitating the pressure release mechanisms 40 releasing the pressure inside the accommodation space.

According to some embodiments of the present application, as shown in FIG. 6, the pressure release mechanisms 40 are installed in the gas discharging channels 51.

In the above, the pressure release mechanisms 40 are installed in the gas discharging channels 51 and located at ends of the gas discharging channels 51 close to the bottom wall 21 in the first direction X, so as to facilitate the pressure release mechanisms 40 releasing the pressure inside the accommodating space.

Exemplarily, the pressure release mechanisms 40 are screwed into the gas discharging channels 51 of the gas discharging elements 50. Certainly, in other embodiments, the pressure release mechanisms 40 may also be connected to the gas discharging elements 50 by means of clamping or welding, etc.

In some embodiments, a sealing element may be sleeved over the outer peripheral side of each pressure release mechanism 40. The sealing element is located between the pressure release mechanism 40 and the inner wall of corresponding gas discharging channel 51. The sealing member is used to seal the pressure release mechanism 40 and the corresponding gas discharging element 50.

Exemplarily, the sealing element is a rubber ring sleeved over the outer peripheral side of the pressure release mechanism 40.

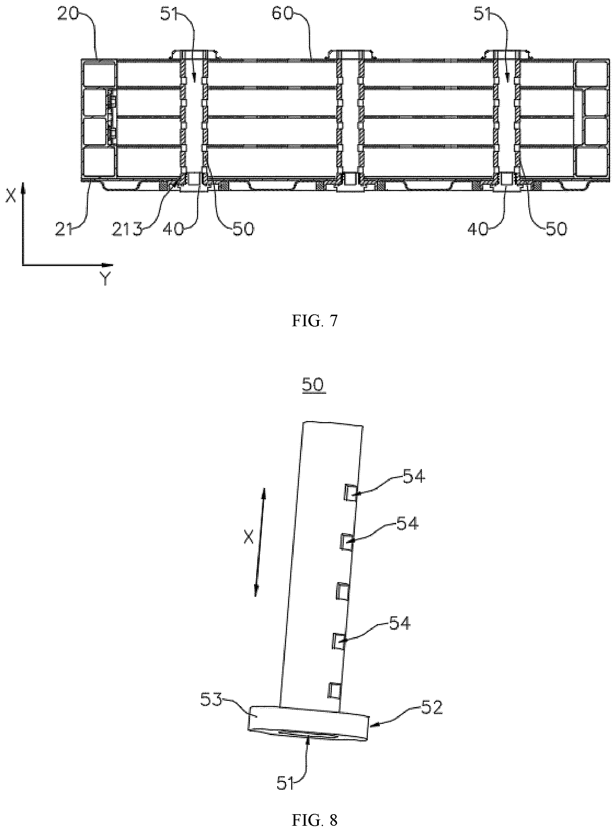

It should be noted that in some embodiments, referring to FIG. 7, FIG. 7 is a sectional view of gas discharging elements 50 being connected with a box body 20 provided in yet some embodiments of the present application. Each of the pressure release mechanism 40 may also be connected to one end of the corresponding gas discharging element 50 inserted in the corresponding installation hole 213, and a part of the pressure release mechanism 40 is inserted in the corresponding gas discharging channel 51 and screwed to the inner wall of the corresponding gas discharging channel 51, so that the pressure release mechanism 40 can release the internal pressure of the accommodation space.

The pressure release mechanisms 40 are installed in the gas discharging channels 51 of the gas discharging elements 50, enabling that the gas discharging elements 50 can play a certain role of protecting the pressure release mechanisms 40, thereby effectively reducing the phenomenon that the pressure release mechanisms 40 are damaged or collide due to external force during use, to ensure the normal use of the pressure release mechanisms 40, prolong the service life of the pressure release mechanisms 40, and further facilitate improving the use safety of the battery 100.

According to some embodiments of the present application, referring to FIG. 6, and further referring to FIG. 8, FIG. 8 is a schematic structural view of gas discharging elements 50 provided in some embodiments of the present application. In the first direction, the gas discharging elements 50 each have a gas discharging end 52 for discharging the exhaust out of the box body 20, and the gas discharging end 52 extends to one side of the bottom wall 21 away from the box cover 30.

In some embodiments, the gas discharging end 52 has a limiting portion 53, the limiting portion 53 protruding from the outer peripheral side of the gas discharging end 52, the limiting portion 53 is in an annular structure extending along the circumference of the gas discharging element 50, and the limiting portion 53 is used to abut against the side of the bottom wall 21 away from the box cover 30 to limit the gas discharging element 50, so as to facilitate installing the gas discharging element 50 on the bottom wall 21.

The gas discharging end 52 of the gas discharging element 50 extends out of one side of the bottom wall 21 away from the box cover 30, that is, one end of the gas discharging element 50 passes through and extends out of the bottom wall 21 in the first direction X. By using the battery 100 in such structure, on the one hand, it is convenient to install and fix the gas discharging elements 50 on the box body 20, and on the other hand, it is convenient to discharge the exhaust generated by the thermal runaway of the battery cells 10 through the gas discharging channels 51 of the gas discharging elements 50, which is beneficial to achieve the directional discharging of the exhaust in the accommodation space.

According to some embodiments of the present application, referring to FIG. 4, FIG. 5 and FIG. 6, the battery 100 further includes at least one divider 60. The at least one divider 60 is configured to divide the accommodation space into a plurality of chambers 70, the chambers 70 being configured for accommodating the battery cells 10, and the at least one divider 60 is installed with the gas discharging elements 50.

Exemplarily, there is one divider 60, and the divider 60 is installed in the first region 211, and the divider 60 extends in the second direction Y, so that chambers 70 for accommodating the battery cells 10 are formed on both sides of the divider 60 in the third direction Z. In other embodiments, the number of dividers 60 may also be two, three or four, etc., and the arrangement of the dividers 60 may also be various, and the plurality of dividers 60 may be arranged at intervals in the third direction Z, or the multiple dividers 60 may also be arranged to intersect each other. For example, two dividers 60 are arranged perpendicular to each other, so as to divide the accommodation chamber into four chambers 70.

In some embodiments, installation channels extending in the first direction X are provided inside the divider 60, the installation channels are provided corresponding to the installation holes 213 on the bottom wall 21, the gas discharging elements 50 penetrate through the installation holes 213 and the installation channels, and one ends of the gas discharging elements 50 away from the gas discharging ends 52 in the first direction X extend out of one side of the divider 60 facing the box cover 30.

The divider 60 is provided inside the accommodation space, such that the divider 60 can divide the accommodation space into a plurality of chambers 70 for accommodating the battery cells 10, and the gas discharging elements 50 are installed on the divider 60 to realize that the gas discharging elements 50 are located between the battery cells 10 in the accommodation space, thus reducing the distance between the gas discharging elements 50 and the battery cells 10, further effectively shortening the discharging path of the exhaust generated by the battery cells 10 during thermal runaway, and facilitating alleviating the phenomenon that the exhaust diffuses in the accommodation space.

According to some embodiments of the present application, as shown in FIG. 5 and FIG. 6, a plurality of flow guiding channels 61 arranged at intervals in the first direction X and communicating with each other are formed inside the divider 60, at least one of the flow guiding channels communicates with the accommodation space, and the flow guiding channels communicate with the gas discharging channels 51.

Exemplarily, four flow guiding channels 61 are formed inside the divider 60, and the four flow guiding channels 61 are arranged at intervals in the first direction X. In other embodiments, the number of the flow guiding channels 61 may be two, three or five, etc.

A plurality of flow guiding channels 61 communicating with each other are provided inside the divider 60, and the flow guiding channels 61 can communicate with the accommodation space and the gas discharging channels 51 of the gas discharging elements 50, such that the exhaust generated due to the thermal runaway of the battery cells 10 can enter the gas discharging channels 51 of the gas discharging elements 50 through the flow guiding channels 61, so as to be released by the pressure release mechanisms 40. The battery 100 in such structure can play a role of guiding the exhaust through the flow guiding channels 61 and simultaneously increase the flowing strike of the exhaust, thus playing a certain role of cooling the exhaust.

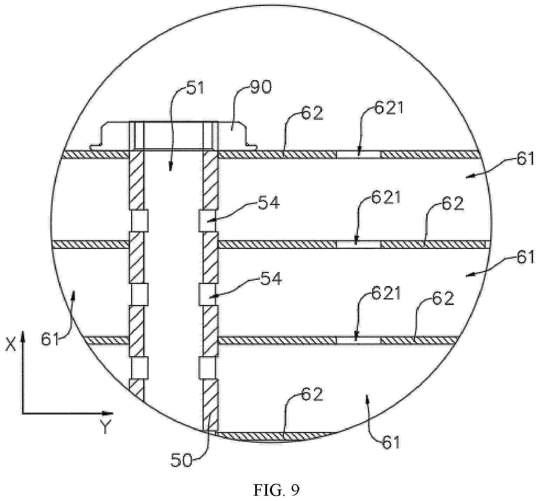

In some embodiments, referring to FIG. 6 and FIG. 8 and further referring to FIG. 9, FIG. 9 is a local enlarged view of Part A of the divider 60 shown in FIG. 6. The divider 60 has at least one dividing portion 62, wherein in the first direction X, two adjacent flow guiding channels 61 is provided therebetween with one dividing portion 62, and each dividing portion is provided with at least one first vent hole 621, the first vent hole being used for communicating with two adjacent flow guiding channels 61. The gas discharging elements 50 extend in the first direction X, and each gas discharging element 50 is provided with a plurality of second vent holes 54 arranged at intervals in the first direction X, the second vent holes being used to communicate with the flow guiding channels 61 and the gas discharging channel 51.

In the above, the second vent holes 54 are provided at positions of the gas discharging element 50 which the individual flow guiding channels 61 are corresponding to, so that the gas discharging channel 51 of the gas discharging element 50 can communicate with each flow guiding channel 61.

Exemplarily, each dividing portion 62 is provided with a plurality of first vent holes 621 to make two adjacent flow guiding channels 61 communicate.

The divider 60 is provided with at least one dividing portion 62, wherein through the dividing portion 62, the interior of the divider 62 may be divided to obtain multiple flow guiding channels 61, and each gas discharging element 50 is provided with multiple second vent holes 54 at intervals in the extending direction thereof, to achieve the communication between the gas discharging channel 51 and the flow guiding channels 61. Hence, the battery 100 in such structure can precipitate the particulate matters in the exhaust while guiding, through the flow guiding channels 61, the exhaust generated by the thermal runaway of the battery cells 10, thus reducing the risk of blocking the gas discharging channel 51 or blocking the pressure release mechanism 40 after the particulate matters in the exhaust enters the gas discharging channel 51, and further facilitating reducing the potential safety hazard of the battery 100 during use.

According to some embodiments of the present application, referring to FIG. 6 and FIG. 9, in the first direction X, one side of the divider 60 facing the box cover 30 is provided with at least one third vent hole 63, and the at least one third vent hole 63 is configured to communicate with the accommodation space and the flow guiding channel 61 of the plurality of the flow guiding channels 61 that is close to the box cover 30.

In the above, one side of the divider 60 facing the box cover 30 in the first direction X, that is, the top of the divider 60 is provided with at least one third vent hole 63, and there are multiple third vent holes 63, so that the flow guiding channels 61 can communicate with each chamber 70 of the accommodation space.

It should be noted that, in some embodiments, the third vent holes 63 may also be provided on the side wall of the divider 60 facing the chambers 70, so that the flow guiding channels 61 can communicate with each chamber 70 in the accommodation space.

By providing, at the top of the divider 60, the at least one third vent hole 63 communicating with the flow guiding channel 61 of the plurality of the flow guiding channels 61 that is close to the box cover 30, the exhaust generated by the thermal runaway of the battery cells 10 can enter the flow guiding channel 61 from the top of the divider 60, thus facilitating alleviating the phenomenon that the exhaust is blocked by the battery cells 10 when entering the flow guiding channel 61, and facilitating the exhaust entering the flow guiding channel 61.

According to some embodiments of the present application, continuing to refer to FIG. 6 and FIG. 9, in the first direction X, two ends of the gas discharging element 50 are respectively connected with a first connector 80 and a second connector 90, the first connector 80 abutting against the side of the bottom wall 21 away from the box cover 30, the second connector 90 abutting against the side of the divider 60 facing the box cover 30, and the first connector 80 and the second connector 90 are used for cooperating with each other to fix the gas discharging element 50.

In the above, the first connector 80 abuts against the side of the bottom wall 21 away from the box cover 30, and the second connector 90 abuts against the side of the divider 60 facing the box cover 30. That is, the first connector 80 is located at the outer side of the bottom wall 21, and the second connector 90 is located at the top of the divider 60.

Exemplarily, the first connector 80 is sleeved over the outer peripheral side of the limiting portion 53 of the gas discharging element 50 and screwed to the limiting portion 53, and the second connector 90 is sleeved over the outer peripheral side of one side of the gas discharging element 50 away from the limiting portion 53 in the first direction X, and screwed to the gas discharging element 50, so as to realize that the first connector 80 and the second connector 90 are respectively connected to the two ends of the gas discharging element 50, so that the first connector 80 and the second connector 90 can cooperate with each other to tightly lock the gas discharging element 50 onto the divider 60. Certainly, in other embodiments, the first connector 80 and the second connector 90 may be connected to the two ends of the gas discharging element 50 respectively by means of bonding, welding or clamping, etc.

Two ends of each gas discharging element 50 are respectively connected with the first connector 80 and the second connector 90, and the first connector 80 and the second connector 90 respectively abut against the side of the bottom wall 21 away from the box cover 30 and the side of the divider 60 facing the box cover 30. That is, after being connected with the two ends of the gas discharging element 50, the first connector 80 and the second connector 90 respectively abut against the outer side of the bottom wall 21 and the top of the divider 60, so that the first connector 80 and the second connector 90 can cooperate with each other to tightly fix the gas discharging element 50 to the divider 60, thus realizing the installation of the gas discharging element 50. This structure is simple and easy to realize.

According to some embodiments of the present application, as shown in FIG. 6, in the first direction X, one side of the bottom wall 21 away from the box cover 30 is provided with accommodation grooves 214 for accommodating the first connectors 80.

One side of the bottom wall 21 away from the box cover 30 is provided with the accommodation grooves 214 for accommodating the first connectors 80, so that the first connectors 80 can be accommodated in the accommodation grooves 214, thus enabling that the accommodation grooves 214 on the one hand can play a certain role of limiting the first connectors 80 to reduce the risk of disengagement of the first connectors 80 caused by the movement thereof, and on the other hand, can play a certain role of positioning the first connectors 80 to facilitate installing the first connectors 80 during assembly.

In some embodiments, in the first direction X, the first connectors do not protrude beyond the side of the bottom wall 21 away from the box cover 30.

In the above, the first connectors 80 do not protrude beyond the side of the bottom wall 21 away from the box cover 30, that is, the first connectors 80 are completely accommodated in the accommodation grooves 214 and abut against the groove bottom walls 21 of the accommodation grooves 214.

The first connectors are provided to not protrude beyond the side of the bottom wall 21 away from the box cover 30 in the first direction X. By adopting such structure, the first connectors 80 can be better protected to alleviate the phenomenon of abrasion or colliding of the first connectors during use.

According to some embodiments of the present application, the present application further provides an electric device, including at least one battery 100 according to any one of the above solutions, and the battery 100 is used to provide electric energy for the electric device.

The electric device may be any aforementioned device or system using the battery 100.

According to some embodiments of the present application, referring to FIG. 2 to FIG. 6 and FIG. 8 to FIG. 9, the present application provides a battery 100, including battery cells 10, a box body 20, a box cover 30, pressure release mechanisms 40, gas discharging elements 50 and a divider 60. The box body 20 has a bottom wall 21, and a first region 211 and second regions 212 not overlapping each other in the first direction X are formed on the bottom wall 21. The box cover 30 and the box body 20 are arranged in the first direction X and define together an accommodation space for accommodating the battery cells 10. The box cover 30 and the bottom wall 21 are arranged opposite to each other in the first direction X. The divider 60 is installed in the first region 211, and the divider 60 extends in the second direction Y to divide the accommodation cavity into two chambers 70 for accommodating the battery cells 10. Multiple dividing portions 62 are provided inside the divider 60, the multiple dividing portions 62 are arranged at intervals in the first direction X, so as to divide the interior of the divider 60 into multiple flow guiding channels 61 arranged in sequence in the first direction X, and the dividing portions 62 are each provided with a first vent hole 621 for allowing communication between two adjacent flow guiding channels 61, and the side of the divider 60 facing the box cover 30 is provided with the third vent holes 63 communicating with the flow guiding channels 61. The gas discharging elements 50 penetrates through the divider 60, two ends of each gas discharging element 50 respectively extend out of one side of the bottom wall 21 away from the box cover 30 and one side of the divider 60 facing the box cover 30, each gas discharging element 50 is formed thereinside with a gas discharging channel 51 extending in the first direction X and communicating with the accommodation space, the gas discharging element 50 is provided with multiple second vent holes 54 arranged at intervals in the first direction X, the second vent holes 54 are used to communicate with the flow guiding channels 61 and the gas discharging channel 51, two ends of the gas discharging element 50 are respectively connected with a first connector 80 and a second connector 90, the first connector 80 abuts against the side of the bottom wall 21 away from the box cover 30, the second connector 90 abuts against the side of the divider 60 facing the box cover 30, and the first connector 80 and the second connector 90 are used for cooperating with each other to fix the gas discharging element 50. The pressure release mechanisms 40 are provided inside the gas discharging channels 51, and the pressure release mechanisms 40 each are configured to be activated when the pressure or temperature in the accommodation space reaches a threshold value, to release the pressure in the accommodation space.

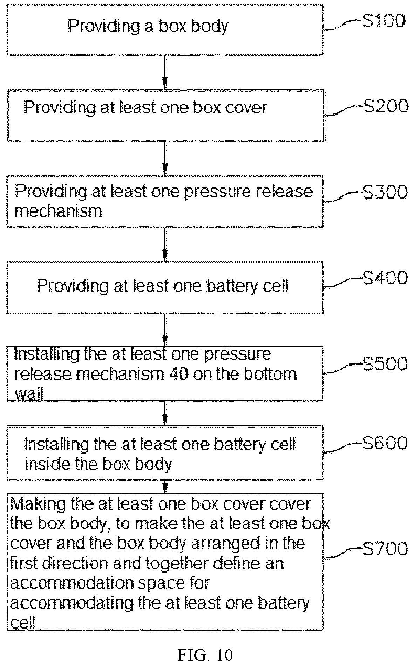

Embodiments of the present application further provide a manufacturing method for a battery 100, referring to FIG. 10, FIG. 10 is a schematic flow chart of a manufacturing method for a battery 100 provided in some embodiments of the present application. The manufacturing method includes:
S100: providing a box body 20, the box body 20 having a bottom wall 21;
S200: providing at least one box cover 30;
S300: providing at least one pressure release mechanism 40;
S400: providing at least one battery cell 10;
S500: installing the at least one pressure release mechanism 40 on the bottom wall 21;
S600: installing the at least one battery cell 10 inside the box body 20;
S700: making the at least one box cover 30 cover the box body 20, to make the at least one box cover 30 and the box body 20 arranged in the first direction X and define together an accommodation space for accommodating the at least one battery cell 10,
wherein projections of the at least one pressure release mechanism 40 and the at least one battery cell 10 do not overlap in a plane perpendicular to the first direction X, and the at least one pressure release mechanism 40 each is configured to be activated when the pressure or temperature in the accommodation space reaches a threshold value, to release the pressure in the accommodation space.

It should be noted that for the related structures of the battery 100 manufactured by the manufacturing method provided in the embodiments above, reference may be made to the battery 100 provided by the embodiments above, which are not repeated here.

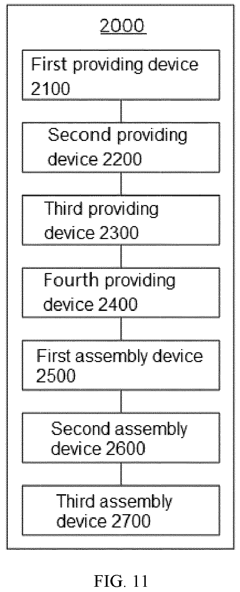

Embodiments of the present application further provide a manufacturing device for a battery 100, referring to FIG. 11, FIG. 11 is a schematic block diagram of a manufacturing device for a battery 100 provided in some embodiments of the present application. The manufacturing device includes a first providing device, a second providing device, a third providing device, a fourth providing device, a first assembly device, a second assembly device and a third assembly device.

The first providing device is configured for providing a box body 20, the box body 20 having a bottom wall 21. The second providing device is configured for providing at least one box cover 30. The third providing device is configured for providing at least one pressure release mechanism 40. The fourth providing device is configured for providing at least one battery cell 10. The first assembly device is configured for installing the at least one pressure release mechanism 40 on the bottom wall 21. The second assembly device is configured for installing the at least one battery cell 10 inside the box body 20. The third assembly device is configured for making the at least one box cover 30 cover the box body 20, to make the at least one box cover 30 and the box body 20 arranged in the first direction X and define together an accommodation space for accommodating the at least one battery cell 10.

In the above, projections of the at least one pressure release mechanism 40 and the at least one battery cell 10 do not overlap in a plane perpendicular to the first direction X, and the at least one pressure release mechanism 40 each is configured to be activated when the pressure or temperature in the accommodation space reaches a threshold value, to release the pressure in the accommodation space.

It should be noted that for the related structures of the battery 100 manufactured by the manufacturing device provided in the embodiments above, reference may be made to the battery 100 provided by the embodiments above, which are not repeated here.

It should be noted that, without conflict, the embodiments in the present application and the features in the embodiments may be combined with each other.

The above are only preferred embodiments of the present application, and are not intended to limit the present application. For those skilled in the art, there may be various modifications and changes in the present application. Any modifications, equivalent replacements, improvements, etc. made within the spirits and principles of the present application shall be included within the protection scope of the present application.

## Claims

1. A battery, comprising:
at least one battery cell;
a box body, the box body having a bottom wall;
at least one box cover, wherein the at least one box cover and the box body are arranged in a first direction and define together an accommodation space configured for accommodating the at least one battery cell, and the at least one box cover and the bottom wall are arranged opposite to each other in the first direction; and
at least one pressure release mechanism, wherein the at least one pressure release mechanism is installed on the bottom wall, and the at least one pressure release mechanism each is configured to be activated when a pressure or a temperature in the accommodation space reaches a threshold value, to release the pressure in the accommodation space;
wherein projections of the at least one pressure release mechanism and the at least one battery cell do not overlap in a plane perpendicular to the first direction.

2. The battery according to claim 1, wherein the battery further comprises:
at least one gas discharging element, wherein the at least one gas discharging element is installed on the bottom wall and extends into the accommodation space, and the at least one gas discharging element each is provided thereinside with a gas discharging channel which is configured to guide an exhaust generated by thermal runaway of the at least one battery cell to pass through the at least one pressure release mechanism and then be discharged from the box body.

3. The battery according to claim 2, wherein the at least one pressure release mechanism is installed in the corresponding gas discharging channel.

4. The battery according to claim 3, wherein in the first direction, the at least one gas discharging element each has a gas discharging end configured for discharging the exhaust out of the box body, and the gas discharging end extends to one side of the bottom wall away from the at least one box cover.

5. The battery according to any one of claim 2-4, wherein the battery further comprises:
at least one divider, wherein the at least one divider is configured to divide the accommodation space into a plurality of chambers which are configured to accommodate the at least one battery cell, and the at least one divider each is provided with the at least one gas discharging element.

6. The battery according to claim 5, wherein the at least one divider each is provided thereinside with a plurality of flow guiding channels arranged at intervals in the first direction and communicating with each other, at least one of the flow guiding channels communicates with the accommodation space, and the flow guiding channels communicate with the gas discharging channel.

7. The battery according to claim 6, wherein the at least one divider each has at least one dividing portion, wherein in the first direction, each two adjacent flow guiding channels is provided therebetween with one dividing portion, and the dividing portion is provided with at least one first vent hole configured for communicating with two adjacent flow guiding channels communicate; and
the at least one gas discharging element extends in the first direction, and the at least one gas discharging element is provided with a plurality of second vent holes arranged at intervals in the first direction, the second vent holes being configured for communicating with the flow guiding channels and the gas discharging channel.

8. The battery according to claim 6 or 7, wherein in the first direction, one side of the each divider facing the at least one box cover is provided with at least one third vent hole, and the at least one third vent hole is configured to communicate with the accommodation space and the flow guiding channel of the plurality of the flow guiding channels that is close to the at least one box cover.

9. The battery according to any one of claims 5-8, wherein in the first direction, two ends of each of the at least one gas discharging element are respectively connected with a first connector and a second connector, the first connector abuts against one side of the bottom wall away from the at least one box cover, the second connector abuts against one side of the divider facing the at least one box cover, and the first connector and the second connector are used to cooperate with each other to fix the each gas discharging element.

10. The battery according to claim 9, wherein in the first direction, the side of the bottom wall away from the at least one box cover is provided with at least one accommodation groove configured for accommodating the corresponding first connector.

11. The battery according to claim 10, wherein in the first direction, the first connector does not protrude beyond the side of the bottom wall away from the at least one box cover.

12. An electric device, comprising at least one battery each of which is according to any one of claim 1-11.

13. A manufacturing method for a battery, comprising:
providing a box body, wherein the box body has a bottom wall;
providing at least one box cover;
providing at least one pressure release mechanism;
providing at least one battery cell;
installing the at least one pressure release mechanism on the bottom wall;
installing the at least one battery cell inside the box body; and
making the at least one box cover cover the box body, to make the at least one box cover and the box body arranged in a first direction and define together an accommodation space configured for accommodating the at least one battery cell,
wherein projections of the at least one pressure release mechanism and the at least one battery cell do not overlap in a plane perpendicular to the first direction, and the at least one pressure release mechanism each is configured to be activated when a pressure or a temperature in the accommodation space reaches a threshold value, to release the pressure in the accommodation space.

14. A manufacturing device for a battery, comprising:
a first providing device, configured for providing a box body, wherein the box body has a bottom wall;
a second providing device, configured for providing at least one box cover;
a third providing device, configured for providing at least one pressure release mechanism;
a fourth providing device, configured for providing at least one battery cell;
a first assembly device, configured for installing the at least one pressure release mechanism on the bottom wall;
a second assembly device, configured for installing the at least one battery cell inside the box body; and
a third assembly device, configured for making the at least one box cover cover the box body, to make the at least one box cover and the box body arranged in the first direction and define together an accommodation space configured for accommodating the at least one battery cell,
wherein projections of the at least one pressure release mechanism and the at least one battery cell do not overlap in a plane perpendicular to the first direction, and the at least one pressure release mechanism each is configured to be activated when a pressure or a temperature in the accommodation space reaches a threshold value, to release the pressure in the accommodation space.
